# EUROPEAN PATENT APPLICATION

(11) **EP 4 794 088 A1**
(43) Date of publication of application: **19.08.2026**
(21) Application number: 24935620.5
(22) Date of filing: 29.08.2024
(51) Int. Cl.: H01M 50/271, H01M 50/24, H01M 50/627

(54) **BATTERY CELL COVER PLATE, BATTERY CELL, AND BATTERY PACK**

(30) Priority: 15.04.2024 CN 202420770248 U
(71) Applicant: Eve Power Co., Ltd., Jingmen, Hubei 448000 (CN)
(72) Inventor: FANG, Hua, Jingmen, Hubei 448000 (CN); CHEN, Xianyang, Jingmen, Hubei 448000 (CN); YUAN, Dingding, Jingmen, Hubei 448000 (CN); CHENG, Cheng, Jingmen, Hubei 448000 (CN)
(74) Representative: Zhu, Puxing
(86) International application number: PCT/CN2024/115468
(87) International publication number: WO 2025/218089

(57) **Abstract**

A cell cover plate, a cell, and a battery pack are provided by the present disclosure. The cell cover plate includes a cover plate body. The cover plate body includes a top surface and a bottom surface opposite to each other. The cover plate body is provided with a liquid injection hole. The liquid injection hole penetrates through from the top surface to the bottom surface. The bottom surface is configured to face a cell pack, at least a partial region on the bottom surface is configured as a flow guiding surface. The flow guiding surface is adjacent to the liquid injection hole. The flow guiding surface is inclined from the liquid injection hole in a direction away from the top surface.

## Description

The present disclosure claims priority to Chinese Patent Application No. 202420770248.5 filed with the Chinese Patent Office on Apr. 15, 2024. The disclosure of which is incorporated herein by reference in its entirety.

### TECHNICAL FIELD

The present disclosure relates to the field of battery technologies, and in particular, to a cell cover plate, a cell, and a battery pack.

### BACKGROUND

In the related art, a cell mainly includes a casing, a cell pack, and a cell cover plate. The casing includes a mounting cavity and a cavity opening communicated with the mounting cavity. The cell pack is mounted inside the mounting cavity. The cell cover plate covers the cavity opening of the mounting cavity to seal and mount the cell pack. Furthermore, during production processes, the cell needs to undergo a baking process, so as to remove moisture in the cell pack and improve electrical performance and safety.

### SUMMARY

When the cell is baked, since a bottom surface of the cell cover plate is perpendicular to a rising direction of water vapor, the water vapor will be retained on the bottom surface of the cell cover plate after contacting the bottom surface of the cell cover plate. The water vapor will not continue to flow to a liquid injection hole and be discharged, so that the water vapor cannot be quickly discharged from the liquid injection hole, moisture in the cell cover plate cannot be quickly dispersed, and the drying efficiency is relatively low.

A cell cover plate is provided by the present disclosure. The cell cover plate includes a cover plate body. The cover plate body includes a top surface and a bottom surface opposite to each other. The cover plate body is provided with a liquid injection hole. The liquid injection hole penetrates from the top surface to the bottom surface. The bottom surface is configured to face the cell pack. At least a partial region on the bottom surface is configured as a flow guiding surface. The flow guiding surface is adjacent to the liquid injection hole. The flow guiding surface is further inclined from the liquid injection hole in a direction away from the top surface.

A cell is further provided by the present disclosure. The cell includes a casing, a cell pack, and the above-described cell cover plate. The casing includes a mounting cavity and a cavity opening communicated with the mounting cavity. The cell pack is mounted inside the mounting cavity. The cell cover plate covers the cavity opening.

A battery pack is further provided by the present disclosure. The battery pack includes the above-described cell.

### BENEFICIAL EFFECTS

In the cell cover plate provided by the present disclosure, at least the bottom surface of the cover plate body is provided as the flow guiding surface. The flow guiding surface is adjacent to the liquid injection hole. The flow guiding surface is inclined from the liquid injection hole in the direction away from the top surface. As such, when the water vapor rises and flows to the flow guiding surface, since the flow guiding surface is inclined, the water vapor may continue to flow to the liquid injection hole along the flow guiding surface. Then the water vapor is discharged from the liquid injection hole in time, so as to prevent the water vapor from being retained. Thus, water in the cell pack may be ensured to be discharged more quickly, thereby improving a technical problem that a discharge speed of the moisture in the cell pack is relatively low when the cell is baked.

### BRIEF DESCRIPTION OF THE DRAWINGS

FIG. 1 is a schematic three-dimensional view of a cell cover plate according to the present disclosure.
FIG. 2 is a structural cross-sectional view of the cell cover plate in FIG. 1.
FIG. 3 is a structural cross-sectional view of the cell cover plate in FIG. 2 at A-A.
FIG. 4 is a structural cross-sectional view of another embodiment of a cell cover plate according to the present disclosure.
FIG. 5 is a structural cross-sectional view of the cell cover plate in FIG. 4 at B-B.
FIG. 6 is a structural cross-sectional view of yet another embodiment of a cell cover plate according to the embodiments of the present disclosure.
FIG. 7 is a structural cross-sectional view of an embodiment of a cell according to the embodiments of the present disclosure.

### Description of reference numbers:

100, cell cover plate; 10, cover plate body; 11, top surface; 12, bottom surface; 121, flow guiding surface; 1211, first flow guiding surface; 1212, second flow guiding surface; 122, first bottom surface; 123, second bottom surface; 124, flow guiding groove; 125, explosion-proof hole; 13, liquid injection hole; 14, cover body; 15, insulation plate; 151, positive insulation plate; 152, negative insulation plate; 16, reinforcing boss; 161, guiding surface; 1611, proximal side; 1612, distal side; 17, explosion-proof valve; 18, positive pole post; 19, negative pole post; 200, cell; 210, casing; 211, mounting cavity; 212, cavity opening; 220, cell pack.

### DETAILED DESCRIPTION

In the description of the present disclosure, unless otherwise specified and limited, the terms "connected", "connection", and "fixed" should be understood in a broad meanings. For example, it is a fixed connection, a detachable connection, or an integrated unit. Alternatively, it is a mechanical connection or an electrical connection. Alternatively, it is a direct connection or an indirect connection through an intermediate medium. Alternatively, it is an internal connection of two components or an interaction relationship between two components. For those skilled in the art, the specific meanings of the above-described terms in the present disclosure can be understood according to specific circumstances.

In the present disclosure, a structure in which a first feature is "on" or "beneath" a second feature may include an embodiment in which the first feature directly contacts the second feature, and may also include an embodiment in which an additional feature is formed between the first feature and the second feature so that the first feature does not directly contact the second feature, unless otherwise specified. Furthermore, that the first feature is "over", "above", or "on" the second feature includes that the first feature directly above and obliquely above the second feature, as well as that the first feature is higher than the second feature. That the first feature is "down", "below", or "under" the second feature includes that the first feature directly below and obliquely above the second feature, as well as that the first feature is lower than the second feature.

In the description of the present disclosure, terms such as "above", "below", "left", "right", "front", "back" refer to the orientation or positional relationship shown in the appended drawings, and are only for the purpose of facilitating the description and simplifying of operation, rather than indicating or implying that the apparatus or component referred to must have a particular orientation or must be configured or operated in a particular orientation, therefore should not be construed as a limitation towards the present disclosure. In addition, the terms "first" and "second" are used to distinguish in the description and have no special meaning.

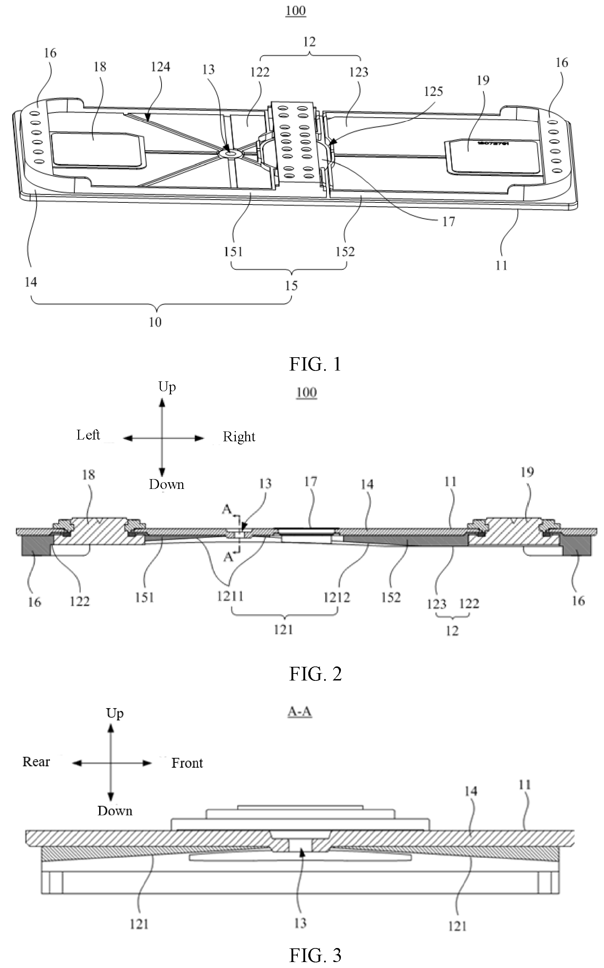

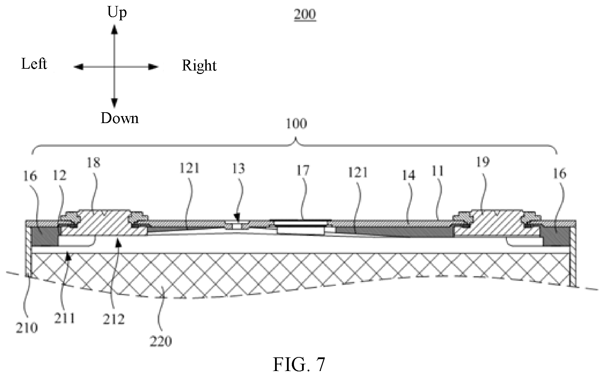

As shown in FIG. 1, the utility model of the present disclosure provides a cell cover plate 100. The cell cover plate 100 is a key component of a cell 200. Specifically, referring to FIG. 7, FIG. 7 is an embodiment in which the cell cover plate 100 of the utility model and other components are assembled into the cell 200. The cell 200 mainly includes a casing 210, a cell pack 220, and the cell cover plate 100. The casing 210 is generally made of a metal (such as aluminum, copper, stainless steel, etc.) having good thermal conductivity and mechanical properties, so as to effectively protect an internal structure of the cell 200 (such as the cell pack 220)). The casing 210 includes a mounting cavity 211 and a cavity opening 212 communicated with the mounting cavity 211.

The cell pack 220 is mounted inside the mounting cavity 211 of the casing 210. The cell pack 220 includes a positive electrode, a negative electrode, and a separator. The cell pack 220 is an important component inside the cell 200 for generating an electrochemical reaction, thereby achieving charging and discharging.

The cell cover plate 100 covers the cavity opening 212 of the mounting cavity 211 to protect the internal structure of the cell 200, thereby preventing the internal structure of the cell 200 from being damaged by external physical or chemical factors.

As shown in FIG. 1 and FIG. 2, FIG. 1 is a schematic three-dimensional view of an embodiment of a cell cover plate of the utility model, and FIG. 2 is a structural cross-sectional view of the cell cover plate in FIG. 1. The cell cover plate 100 of the present disclosure includes a cover plate body 10. The cover plate body 10 includes a bottom surface 12 configured to face the cell pack 220 and a top surface 11 opposite to the bottom surface 12. The cover plate body 10 is provided with one or more liquid injection holes 13. The liquid injection hole 13 penetrates through the top surface 11 and the bottom surface 12.

Specifically, in this embodiment, the cover plate body 10 mainly includes a cover body 14 and an insulation plate 15. The cover body 14 may be formed of a smooth aluminum sheet. A material of the insulation plate 15 may be plastic. The insulation plate 15 may be fixed on a side of the cover body 14 facing the cell pack 220 by hot melting. As shown in FIG. 2, a surface of the cover body 14 on a side away from the insulation plate 15 is the top surface 11. A surface of the insulation plate 15 on a side away from the cover body 14 is the bottom surface 12. Referring to FIG. 7, when the cell 200 is assembled, the bottom surface 12 faces the cell pack 220 inside the casing 210, and the top surface 11 faces away from the cell pack 220.

The cover plate body 10 is provided with the liquid injection hole 13. The liquid injection hole 13 penetrates from the top surface 11 to the bottom surface 12. After the cover plate body 10 is assembled on the casing 210, the liquid injection hole 13 is communicated with the mounting cavity 211 where the cell pack 220 is located, so that the water vapor may be discharged from the liquid injection hole 13 during baking, and an electrolyte is injected into the mounting cavity 211 after baking. The size, number, position of the liquid injection hole 13 on the cover plate body 10, etc., may be flexibly designed according to actual needs, which is not specifically limited herein.

Certainly, the cover plate body 10 is generally further provided with components such as a positive pole post 18, a negative pole postl9, an explosion-proof valve 17, and a sealing member. Specific structures, mounting manners, functions, etc., of these components may refer to the related prior art, which will not be described in detail herein.

It should be noted that after the assembly of the casing 210, the cell pack 220, and the cover plate body 10 is completed and before the electrolyte is injected, the cell 200 needs to be baked to remove moisture on the cell pack 220, thereby improving electrical performance and safety of the cell. However, in the related art, since the bottom surface of the cell cover plate is a horizontal plane perpendicular to a rising direction of water vapor, after the water vapor rises and contacts the bottom surface of the cell cover plate, the water vapor will be retained on the bottom surface of the cell cover plate. The water vapor will not continue to flow to the liquid injection hole and be discharged, so that the water vapor cannot be quickly discharged from the liquid injection hole, moisture in the cell pack cannot be quickly dispersed, and the drying efficiency is relatively low.

Therefore, in order to solve the above-described technical problem, in the embodiments of the present disclosure, as shown in FIG. 2, at least a partial region on the bottom surface 12 is configured as a guiding surface 121. The guiding surface 121 is adjacent to the liquid injection hole 13. The guiding surface 121 is further inclined from the liquid injection hole 13 in a direction away from the top surface 11.

Specifically, the partial region of the bottom surface 12 close to the liquid injection hole 13 may be provided as the flow guiding surface 121, or an entire region on the bottom surface 12 may be provided as the flow guiding surface 121, which may be flexibly selected as required. For example, referring to FIG. 2, when the flow guiding surface 121 is provided, the flow guiding surface 121 may be provided only in a left region of the liquid injection hole 13, or the flow guiding surface 121 may be provided only in a right region of the liquid injection hole 13. Alternatively, referring to FIG. 3, FIG. 3 is a structural cross-sectional view of the cell cover plate at A-A in FIG. 2, when the flow guiding surface 121 is provided, the flow guiding surface 121 may be provided only in a rear region of the liquid injection hole 13, or the flow guiding surface 121 may be provided only in a front region of the liquid injection hole 13. Alternatively, referring to FIG. 2 and FIG. 3, the flow guiding surface 121 may be provided in at least two of the front region, the rear region, the left region, and the right region of the liquid injection hole 13, or even the flow guiding surface 121 may be correspondingly provided at any position in a circumferential direction of the liquid injection hole 13.

In summary, a specific arrangement of the flow guiding surface 121 may be determined according to actual conditions. For example, in some embodiments, the position of the liquid injection hole 13 on the cover plate body 10 is biased to a left side of the cover plate body 10, and the bottom surface 12 has a relatively large region in the right region of the liquid injection hole 13. Meanwhile, the flow guiding surface 121 may be provided in the right region of the liquid injection hole 13, so as to guide more water vapor to the liquid injection hole 13.

The flow guiding surface 121 is adjacent to the liquid injection hole 13, and the flow guiding surface 121 is inclined from the liquid injection hole 13 in the direction away from the top surface 11. Specifically, as shown in FIG. 2, the cover plate body 10 extends horizontally during the process of baking the cell 200, and the bottom surface 12 is located below the top surface 11, so the flow guiding surface 121 is inclined downward relative to the liquid injection hole 13. Since the flow guiding surface 121 is inclined, when the water vapor rises and flows to the flow guiding surface 121, the water vapor may continue to flow to the liquid injection hole 13 along the flow guiding surface 121. Then the water vapor may be discharged from the liquid injection hole 13 in time, so as to prevent the water vapor from being retained. This ensures that the moisture in the cell pack 220 may be discharged more quickly, thereby improving the technical problem that a discharge speed of the moisture on the cell pack 220 is relatively slow when the cell 200 is baked.

It should be noted herein that there are a plurality of specific ways in which the flow guiding surface 121 is adjacent to the liquid injection hole 13. For example, in an embodiment, the flow guiding surface 121 is connected to a peripheral edge of the liquid injection hole 13. That is, at least a part of an edge of the liquid injection hole 13 on the bottom surface 12 is formed by an edge of the flow guiding surface 121.

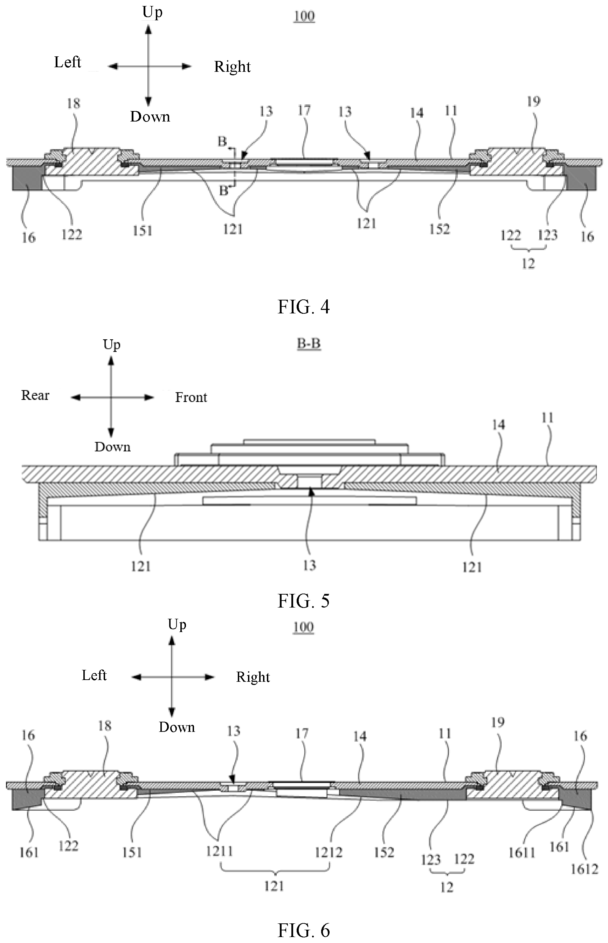

For another example, as shown in FIG. 2, in an embodiment, the cover plate body 10 includes the cover body 14 and the insulation plate 15 (including a positive insulation plate 151 and a negative insulation plate 152). The liquid injection hole 13 is formed on the cover body 14. The flow guiding surface 121 is formed on the insulation plate 15. Meanwhile, a certain gap is provided between the flow guiding surface 121 and the edge of the liquid injection hole 13, and the flow guiding surface 121 may be provided as close as possible to the liquid injection hole 13. In this embodiment, it should be noted that since the liquid injection hole 13 is formed on the cover body 14 and the flow guiding surface 121 is formed on the insulation plate 15, the insulation plate 15 may be provided with an avoidance hole corresponding to the liquid injection hole 13, so that the liquid injection hole 13 may extend to the bottom surface 12. Meanwhile, a lower end of the liquid injection hole 13 (i.e., an end of the liquid injection hole 13 close to the cell pack 220) may be flush with the bottom surface 12, or a certain height difference is provided between the lower end of the liquid injection hole 13 and the bottom surface 12. For example, in the structural solution shown in FIG. 3, the lower end of the liquid injection hole 13 protrudes downward relative to the bottom surface 12. In the structural solution shown in FIG. 5, the lower end of the liquid injection hole 13 is recessed upward relative to the bottom surface 12.

Optionally, in an embodiment, referring to FIG. 2 and FIG. 3, the guiding surface 121 is an arc surface and is disposed around the liquid injection hole 13. The position of the liquid injection hole 13 is closer to the top surface 11 than any position on the guiding surface 121. Specifically, in this embodiment, the flow guiding surface 121 is an arc surface approximate to a spherical crown surface. The flow guiding surface 121 as a whole is recessed toward a side where the top surface 11 is located. Referring to an up-down direction in FIG. 2 and FIG. 3, the bottom surface 12 provided in this way has a highest point (in FIG. 2 and FIG. 3, the closer to the top is, the higher is), the liquid injection hole 13 is provided at a position of the highest point, so that the liquid injection hole 13 is closer to the top surface 11 than any position on the flow guiding surface 121.

It may be understood that in this embodiment, the flow guiding surface 121 is disposed around the liquid injection hole 13, and the liquid injection hole 13 is located at the highest position of the flow guiding surface 121, so that the water vapor in all directions may be collected into the liquid injection hole 13 and discharged, thereby improving the discharge efficiency of the water vapor, and further improving the drying efficiency.

Alternatively, optionally, in another embodiment, the flow guiding surface 121 is a conical surface, specifically, may be a conical surface or a polygonal pyramid surface. The liquid injection hole 13 is located at a conical top position of the conical surface, so that the water vapor in all directions may be collected into the liquid injection hole 13 and discharged, thereby improving the discharge efficiency of the water vapor.

Optionally, as shown in FIG. 4, in an embodiment, a plurality of liquid injection holes 13 are provided, and the bottom surface 12 forms the flow guiding surface 121 at a position corresponding to each of the liquid injection holes 13. Specifically, in the structural solution shown in FIG. 4, two liquid injection holes 13 are provided. The bottom surface 12 forms the flow guiding surfaces 121 at positions of the two liquid injection holes 13 respectively. The formed flow guiding surfaces 121 may be inclined planes, arc surfaces, or conical surfaces. For example, the two flow guiding surfaces 121 in the figure are both arc surfaces, and the two liquid injection holes 13 are respectively located at the highest positions of the two arc surfaces. It may be understood that in this embodiment, the plurality of liquid injection holes 13 are provided, and the flow guiding surface 121 is correspondingly formed at each of the liquid injection holes 13, so that the water vapor in the cell 200 may be discharged more quickly.

Optionally, in an embodiment, as shown in FIG. 1, the cover plate body 10 includes the cover body 14 and the insulation plate 15 fixed on the cover body 14. The cover body 14 may be the smooth aluminum sheet with good heat dissipation performance. The insulation plate 15 may be made of plastic. As shown in FIG. 2, the insulation plate 15 further includes a positive insulation plate 151 and a negative insulation plate 152 arranged at intervals. The positive insulation plate 151 is configured to be connected to the positive pole post 18. The negative pole post 19 is configured to be connected to the negative pole post 19, so as to respectively perform corresponding insulation treatment on the positive pole post 18 and the negative pole post 19 (generally for insulation between the pole posts and the cover plate 14).

In this embodiment, as shown in FIG. 2, the positive insulation plate 151 includes a first bottom surface 122 configured to face the cell pack 220. The negative insulation plate 152 includes a second bottom surface 123 configured to face the cell pack 220. The first bottom surface 122 and the second bottom surface 123 together constitute the bottom surface 12.

The liquid injection hole 13 penetrates through one of the positive insulation plate 151 and the negative insulation plate 152. For example, as shown in FIG. 2, one liquid injection hole 13 is provided on the cover plate body 10, and the liquid injection hole 13 corresponds to and penetrates through the positive insulation plate 151. Meanwhile, the first bottom surface 122 forms a first flow guiding surface 1211, and the second bottom surface 123 forms a second flow guiding surface 1212. The first flow guiding surface 1211 and the second flow guiding surface 1212 together constitute a flow guiding surface 121.

Specifically, as shown in FIG. 2, the first flow guiding surface 1211 and the second flow guiding surface 1212 are both arc surfaces. When the first bottom surface 122 and the second bottom surface 123 respectively form the first flow guiding surface 1211 and the second flow guiding surface 1212, the principle is that "the position where the liquid injection hole 13 is located is the highest point of the flow guiding surface 121 (referring to the up-down direction in FIG. 2, the closer to the top, the higher the position)". That is, the first flow guiding surface 1211 and the second flow guiding surface 1212 may just constitute the flow guiding surface 121 with a highest point and a larger area, and the liquid injection hole 13 is located at the highest point of the flow guiding surface 121.

It may be understood that, in this embodiment, under a case where the bottom surface 12 includes the first bottom surface 122 and the second bottom surface 123 arranged at intervals, the first flow guiding surface 1211 formed on the first bottom surface 122 and the second flow guiding surface 1212 formed on the second bottom surface 123 together constitute the flow guiding surface 121 with the highest point and the larger area. In this way, more water vapor may be guided to the liquid injection hole 13, thereby improving the efficiency of the water vapor discharging from the cell 200.

In another embodiment, the positive insulation plate 151 is provided with at least one liquid injection hole 13 penetrating through the positive insulation plate 151, and the negative insulation plate 152 is provided with at least one liquid injection hole 13 penetrating through the negative insulation plate 152. As shown in FIG. 4, FIG. 4 is a structural cross-sectional view of another embodiment of the cell cover plate of the utility model. In this structural solution, two liquid injection holes 13 are provided. The two liquid injection holes 13 respectively correspond to the positive insulation plate 151 and the negative insulation plate 152. Meanwhile, the first bottom surface 122 forms the flow guiding surface 121 at the liquid injection holes 13 corresponding to the first bottom surface 122, and the second bottom surface 123 forms the flow guiding surface 121 at the liquid injection holes 13 corresponding to the second bottom surface 123, so that the water vapor in the cell 200 may be discharged more quickly.

In an embodiment, as shown in FIG. 6, in a length direction of the bottom surface 12, each of two sides of the bottom surface 12 is further provided with a reinforcing boss 16, so as to reinforce a structural strength of the cover plate body 10 by the reinforcing boss 16. The reinforcing boss 16 includes a guiding surface 161 configured to face the cell pack 220. The guiding surface 161 is inclinedly disposed and includes a proximal side 1611 and a distal side 1612 opposite to each other. The proximal side 1611 and the distal side 1612 are disposed on the same guiding surface 161. The proximal side 1611 is closer to the liquid injection hole 13 than the distal side 1612. The proximal side 1611 is closer to the top surface 11 than the distal side 1612.

That is, referring to the up-down direction in the figure, since the guiding surface 161 as a whole is inclined upward relative to the distal side 1612. When the water vapor rises and contacts the guiding surface 161 of the reinforcing boss 16, the water vapor will flow along the guiding surface 161 to the position where the liquid injection hole 13 is located, so that more water vapor is guided to the liquid injection hole 13, and the discharge efficiency of the water vapor is improved.

In an embodiment, as shown in FIG. 1, the flow guiding surface 121 is further provided with a flow guiding groove 124. One end of the flow guiding groove 124 is communicated with the liquid injection hole 13, and another end of the flow guiding groove 124 extends in a direction away from the liquid injection hole 13. Specifically, one end of the flow guiding groove 124 away from the liquid injection hole 13 may extend in any direction, e.g., extend towards the position with more water vapor. It may be understood that compared with the flow guiding surface 121 with a larger area, a space inside the flow guiding groove 124 is smaller, so that the directivity of the water vapor when flowing in the flow guiding groove 124 is stronger, and the water vapor basically does not swing left and right during the flowing process inside the flow guiding groove 124. Thus, the water vapor may be guided to the liquid injection hole 13 more quickly, and the discharge efficiency of the water vapor is improved.

It should be noted herein that an extension length, cross-sectional shape, number, etc., of the flow guiding groove 124 may be flexibly designed as required. For example, a plurality of flow guiding grooves 124 may be provided, and each of the flow guiding grooves 124 extends from the liquid injection hole 13 to the edge of the flow guiding surface 121, so as to guide more water vapor to the liquid injection hole 13 more quickly.

Furthermore, in an embodiment, as shown in FIG. 1, the bottom surface 12 is further concavely provided with an explosion-proof hole 125 for mounting an explosion-proof valve 17. The flow guiding groove 124 is further communicated with the explosion-proof hole 125, so that the water vapor in the explosion-proof hole 125 may be guided to the liquid injection hole 13 through the flow guiding groove 124 and discharged, thereby preventing the water vapor from being retained in the explosion-proof hole 125.

For a depth of the flow guiding groove 124, in an embodiment, the cover plate body 10 includes the cover body 14 and the insulation plate 15 fixed on the cover body 14. The surface of the cover body 14 on a side away from the insulation plate 15 forms the top surface 11. The surface of the insulation plate 15 on a side away from the cover body 14 forms the bottom surface 12. The depth of the flow guiding groove 124 is greater than or equal to 1/3 of a thickness of the insulation plate 15 and less than or equal to 2/3 of the thickness of the insulation plate 15. It may be understood that if the depth of the flow guiding groove 124 is too small, the effect of rapid flow guiding will not be obvious enough. If the depth of the flow guiding groove 124 is too large, the structural strength and the insulation effect of the insulation plate 15 will be affected. As such, in this embodiment, the depth of the flow guiding groove 124 is greater than or equal to 1/3 of the thickness of the insulation plate 15 and less than or equal to 2/3 of the thickness of the insulation plate 15, so as to prevent the structural strength and the insulation effect of the insulation plate 15 from being influenced while achieving the rapid flow guiding.

According to a second aspect, as shown in FIG. 7, the embodiments of the utility model provide a cell 200. The cell 200 includes a casing 210, a cell pack 220, and a cell cover plate 100. The casing 210 includes a mounting cavity 211 and a cavity opening 212 communicated with the mounting cavity 211. The cell pack 220 is mounted inside the mounting cavity 211. The cell cover plate 100 covers the cavity opening 212. A specific structure of the cell cover plate 100 refers to any one of the above-described embodiments. Since the cell 200 of the present disclosure adopts all technical solutions of the above-described embodiments, the cell 200 at least has all the beneficial effects brought by the technical solutions of the above-described embodiments, which will not be repeated herein.

According to a third aspect, the embodiments of the utility model provide a battery pack (not shown in the figures). The battery pack may be used in an electric device such as an automobile. The battery pack includes the above-described cell 200. The battery pack includes a plurality of cells 200. The plurality of cells 200 are arranged in a matrix arrangement of a plurality of rows and a plurality of columns.

## Claims

1. A cell cover plate, comprising a cover plate body, wherein the cover plate body comprises a bottom surface configured to face a cell pack and a top surface opposite to the bottom surface, the cover plate body is provided with at least one liquid injection hole, and the liquid injection hole penetrates through the top surface and the bottom surface;
wherein at least a partial region on the bottom surface is configured as a flow guiding surface, the flow guiding surface is adjacent to the liquid injection hole, and the flow guiding surface is further inclined from the liquid injection hole in a direction away from the top surface.

2. The cell cover plate according to claim 1, wherein the flow guiding surface is an arc surface and disposed around the liquid injection hole, and a position where the liquid injection hole is located is closer to the top surface than any position on the flow guiding surface; or wherein the flow guiding surface is a conical surface, and the liquid injection hole is located at a conical top position of the conical surface.

3. The cell cover plate according to claim 2, wherein a plurality of liquid injection holes are provided, and the bottom surface forms the flow guiding surface at a position corresponding to each of the plurality of liquid injection holes.

4. The cell cover plate according to claim 2, wherein the cover plate body comprises a cover body and an insulation plate fixed on the cover body, a surface of the cover body away from the insulation plate forms the top surface, and a surface of the insulation plate away from the cover body forms the bottom surface; and
wherein the liquid injection hole penetrates through the cover body and the insulation plate, and the bottom surface forms the flow guiding surface at the liquid injection hole.

5. The cell cover plate according to claim 4, wherein the insulation plate comprises a positive insulation plate and a negative insulation plate, the positive insulation plate comprises a first bottom surface configured to face the cell pack, the negative insulation plate comprises a second bottom surface configured to face the cell pack, and the first bottom surface and the second bottom surface together constitute the bottom surface; and
wherein the liquid injection hole penetrates through one of the positive insulation plate and the negative insulation plate, the first bottom surface forms a first flow guiding surface, the second bottom surface forms a second flow guiding surface, and the first flow guiding surface and the second flow guiding surface together constitute the flow guiding surface.

6. The cell cover plate according to claim 4, wherein the insulation plate comprises a positive insulation plate and a negative insulation plate, the positive insulation plate comprises a first bottom surface configured to face the cell pack, the negative insulation plate comprises a second bottom surface configured to face the cell pack, and the first bottom surface and the second bottom surface together constitute the bottom surface; and
wherein the positive insulation plate is provided with at least one of the liquid injection holes penetrating through the positive insulation plate, the negative insulation plate is provided with at least one of the liquid injection holes penetrating through the negative insulation plate, the first bottom surface forms the flow guiding surface at the liquid injection holes corresponding to the first bottom surface, and the second bottom surface forms the flow guiding surface at the liquid injection holes corresponding to the second bottom surface.

7. The cell cover plate according to any one of claims 1 to 6, wherein in a length direction of the bottom surface, each of two sides of the bottom surface is further convexly provided with a reinforcing boss, the reinforcing boss comprises a guiding surface configured to face the cell pack, and the guiding surface is inclinedly disposed and comprises a proximal side and a distal side opposite to each other; and
wherein the proximal side is closer to the liquid injection hole than the distal side, and the proximal side is closer to the top surface than the distal side.

8. The cell cover plate according to any one of claims 4 to 6, wherein the flow guiding surface is further concavely provided with a flow guiding groove, one end of the flow guiding groove is communicated with the liquid injection hole, and another end of the flow guiding groove extends along a direction away from the liquid injection hole.

9. The cell cover plate according to claim 8, wherein the bottom surface is further concavely provided with an explosion-proof hole configured to mount an explosion-proof valve, and the flow guiding groove is further communicated with the explosion-proof hole.

10. The cell cover plate according to claim 8, wherein a depth of the flow guiding groove is greater than or equal to 1/3 of a thickness of the insulation plate and less than or equal to 2/3 of the thickness of the insulation plate.

11. A cell, comprising a casing, a cell pack, and the cell cover plate according to any one of claims 1 to 10, wherein the casing comprises a mounting cavity and a cavity opening communicated with the mounting cavity, the cell pack is mounted inside the mounting cavity, and the cell cover plate covers the cavity opening.

12. A battery pack, comprising the cell according to claim 11.
